Europäisches Patentamt

European Patent Office

Office européen des brevets

(19)

(11) Veröffentlichungsnummer : **0 144 502**
**B1**

(12) **EUROPÄISCHE PATENTSCHRIFT**

(45) Veröffentlichungstag der Patentschrift :
**17.08.88**

(51) Int. Cl.⁴ : **G 01 B 11/10**

(21) Anmeldenummer : **84107492.5**

(22) Anmeldetag : **28.06.84**

(54) Optisches Messorgan für die Querschnittsmessung textiler Garne, sowie Verwendung desselben.

(30) Priorität : **04.10.83 CH 5392/83**

(43) Veröffentlichungstag der Anmeldung :
**19.06.85 Patentblatt 85/25**

(45) Bekanntmachung des Hinweises auf die Patenterteilung : **17.08.88 Patentblatt 88/33**

(84) Benannte Vertragsstaaten :
**DE FR GB IT**

(56) Entgegenhaltungen :
**CH-A- 414 199**
**DE-A- 1 548 361**
**DE-A- 2 310 204**
**US-A- 3 941 485**

(73) Patentinhaber : **ZELLWEGER USTER AG**
**Wilstrasse 11**
**CH-8610 Uster (CH)**

(72) Erfinder : **Thomann, Christian**
**Via San Lorenzo**
**I-00040 Lanuvio (Roma) (IT)**

(74) Vertreter : **Dipl.-Phys.Dr. Manitz Dipl.-Ing., Dipl.-Wirtsch. Finsterwald Dipl.-Ing. Grämkow Dipl.-Chem.Dr. Heyn Dipl.-Phys. Rotermund Morgan, B.Sc.(Phys.) Robert-Koch-Strasse 1 D-8000 München 22 (DE)**

## Beschreibung

Die Erfindung betrifft ein optisches Meßorgan für die Messung des Querschnitts textiler Garne mit einer Lichtquelle, einem Lichtempfänger und einem dazwischen angeordneten Meßfeld, sowie mit je einem zwischen der Lichtquelle und dem Meßfeld bzw. dem Meßfeld und dem Lichtempfänger angeordneten, optisch homogenen Lichtleiter mit reflektierenden Seitenflächen.

Eine Überwachung des Querschnitts bzw. des Durchmessers textiler Erzeugnisse, wie Garne und dergl., ist in allen Stufen der Produktion erforderlich. Entsprechend der großen Zahl von Meßstellen sind hierzu möglichst einfache und preiswerte, aber dennoch zuverlässige und stabile Meßvorrichtungen verlangt.

Unter anderem haben sich optische Meßvorrichtungen durchgesetzt, bei denen das Garn von mindestens einer Seite von einer Lichtquelle angestrahlt und auf der gegenüberliegenden Seite ein Lichtempfänger die Größe des vom Garn hervorgerufenen Schattens, d. h. des außerhalb des Schattens auftreffenden Restlichts, in ein elektrisches Signal umwandelt.

Eine wesentliche Voraussetzung für eine brauchbare Querschnittsbestimmung ist, daß die Ausleuchtung des vom Garn durchsetzten Meßfeldes möglichst homogen ist, da die Lage des Garns innerhalb des Meßfeldes schwankt.

Verschiedene Maßnahmen zur Homogenisierung der Ausleuchtung des Meßfeldes optischer Meßvorrichtungen sind bereits bekanntgeworden, die aber nicht zum angestrebten Ziel führten. So wurde beispielsweise in der DE-OS-23 10 204 vorgeschlagen, zwischen Lichtquelle bzw. Lichtempfänger und Garn je mindestens eine Lichtleitfaser zu verlegen, deren dem Garn zugewandte Enden sich axial fluchtend gegenüberliegen. Eine ausreichende Homogenität wurde damit aber nicht erreicht.

In der CH-A-414 199 ist ein optisches Meßorgan der eingangs genannten Art beschrieben, bei dem die Lichtleiter eine Länge aufweisen, die kaum größer als die größte Querschnittsdimension ist. Die den Lichtleiterkörper begrenzenden gewölbten Flächen können innenseitig rauh ausgebildet oder körnig verspiegelt sein. Auch mit diesen aufwendigen Lichtleitern wird noch keine optimale Homogenität erzielt.

Der Erfindung liegt demnach die Aufgabe zugrunde, ein optisches Meßorgan der eingangs genannten Art zu schaffen, das eine optimale Homogenität der Leuchtdichte innerhalb einer das optische Meßfeld bildenden Strecke gewährleistet.

Die Aufgabe wird nach der Erfindung dadurch gelöst, daß die Lichtleiter eine langgestreckte bandartige Form sowie einen über die Länge konstanten Querschnitt aufweisen, wobei die Länge größer ist als die größte Querschnittsdimension, so daß an der jeweiligen Lichtaustrittsstelle eine über die ganze Fläche gleichmäßige Leuchtdichte resultiert.

Beim erfindungsgemäßen Meßorgan wird in einem lichtdurchlässigen, optisch homogenen Lichtleiter in der Form eines Bandes mit vorzugsweise rechteckigem Querschnitt, dessen Länge größer ist als die größte Querschnittsdimension, das auf einer Seite von einer Lichtquelle eingestrahlte Licht durch innere Reflexionen derart homogenisiert, daß sich über die gesamte Fläche an der Lichtaustrittsstelle eine gleichmäßige Leuchtdichte einstellt. Durch das Meßfeld bedingte Meßwertverfälschungen sind demnach ausgeschlossen.

Um Lichtverluste zu vermeiden, ist sowohl als Material für die Lichtleiter ein gut lichtdurchlässiger Kunststoff, beispielsweise Acrylharz, zu wählen, als auch deren Oberfläche durch Polieren und eventuell Verspiegeln so zu behandeln, daß möglichst kein Lichtaustritt an die Umgebung erfolgt. Unter diesen Voraussetzungen können die Lichtleiter ohne Einbuße an Lichtdurchlässigkeit gebogen, geknickt oder verdrillt werden, wie es die örtlichen Einbaumöglichkeiten erfordern.

Um einen wirksamen Übergang des Lichtstromes sowohl auf der Seite der Lichtquelle als auch auf der Seite des Lichtempfängers zu erreichen, kann die Stirnfläche des Lichtleiters an eventuell gekrümmte, beispielsweise kugelige Flächen angepaßt werden.

Weiter besteht die Möglichkeit, zwischen Lichtsender und Lichtleiter und/oder zwischen Lichtleiter und Lichtempfänger Verbindungsstücke aus Lichtleitfasern einzusetzen, wenn die Einbauverhältnisse solche Maßnahmen nahelegen.

Die Erfindung wird im folgenden anhand von Ausführungsbeispielen unter Bezugnahme auf die Zeichnung näher erläutert ; in dieser zeigt :

Fig. 1 ein optisches Meßorgan mit gestreckten Lichtleitern,

Fig. 2 ein Meßorgan mit gebogenen Lichtleitern,

Fig. 3 ein Meßorgan mit konkav angepaßten Lichtleitern, und

Fig. 4 ein Meßorgan mit zusätzlichen Lichtleitfasern.

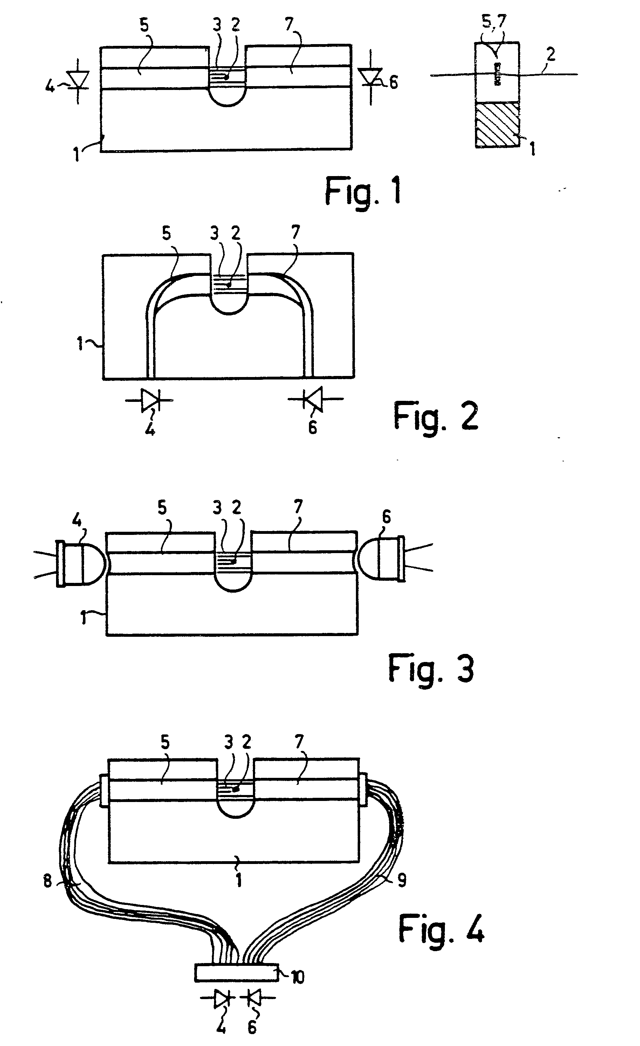

Gemäß Fig. 1 weist das optische Meßorgan ein Gehäuse 1 mit einem Meßschlitz auf, durch den ein Garn 2 läuft. In dieses Gehäuse 1 sind Lichtleiter 5, 7 eingelegt, deren Stirnflächen einerseits gegen eine Lichtquelle 4 bzw. gegen einen Lichtempfänger 6, und andererseits gegen den Meßschlitz orientiert sind. Durch das aus dem Lichtleiter 5 austretende und in den Lichtleiter 7 eintretende Strahlenbündel wird ein Meßfeld 3 gebildet.

Gemäß der in Fig. 2 gezeigten Ausführungsvariante sind die Lichtleiter 5, 7 gebogen bzw. verdrillt. Dies ist zulässig, da die Lichtleiter 5, 7 das in sie eingespeiste Licht im Innern reflektieren, und auch bei Krümmungen der Oberfläche nicht nach außen abstrahlen.

In Fig. 3 ist gezeigt, daß die gegen die Lichtquelle 4 bzw. den Lichtempfänger 6 orientierte Stirnfläche der Lichtleiter 5, 7 zur besseren Ausnützung des Lichtstromes an allfällige Krümmungen der betreffenden Oberfläche angepaßt ist.

Bei der Ausführungsvariante gemäß Fig. 4 ist zwischen die Lichtquelle 4 und den Lichtleiter 5, bzw. zwischen den Lichtempfänger 6 und den Lichtleiter 7 je ein Bündel aus Lichtleitfasern 8, 9 eingesetzt. Die Lichtleitfasern 8, 9 sind auf der dem Gehäuse 1 abgewandten Seite in einer Fassung 10 gehalten, wo sie der Lichtquelle 4 bzw. dem Lichtempfänger 6 gegenübergestellt sind.

### Patentansprüche

1. Optisches Meßorgan für die Messung des Querschnitts textiler Garne (2) mit einer Lichtquelle (4), einem Lichtempfänger (6) und einem dazwischen angeordneten Meßfeld (3) sowie mit je einem zwischen der Lichtquelle (4) und dem Meßfeld (3) bzw. dem Meßfeld und dem Lichtempfänger (6) angeordneten, optisch homogenen Lichtleiter (5, 7) mit reflektierenden Seitenflächen, dadurch gekennzeichnet, daß die Lichtleiter (5, 7) eine langgestreckte bandartige Form sowie einen über die Länge konstanten Querschnitt aufweisen, wobei die Länge größer ist als die größte Querschnittsdimension, so daß an der jeweiligen Lichtaustrittsstelle eine über die ganze Fläche gleichmäßige Leuchtdichte resultiert.

2. Optisches Meßorgan nach Anspruch 1, dadurch gekennzeichnet, daß die Außenflächen der Lichtleiter (5, 7) einen spiegelnden Belag aufweisen.

3. Optisches Meßorgan nach Anspruch 1, dadurch gekennzeichnet, daß die Lichtleiter (5, 7) aus lichtdurchlässigem Kunststoff, wie Acrylharz, bestehen.

4. Optisches Meßorgan nach den Ansprüchen 1 und 2, dadurch gekennzeichnet, daß die Lichtleiter (5, 7) entsprechend den örtlichen Verhältnissen gebogen, gefaltet und/oder verdrillt sind.

5. Optisches Meßorgan nach Anspruch 1, dadurch gekennzeichnet, daß die der Lichtquelle (4) und/oder dem Lichtempfänger (6) zugewandten Enden der Lichtleiter (5, 7) entsprechend den Oberflächen dieser Lichtquelle bzw. dieses Lichtempfängers konkave Krümmungen aufweisen.

6. Optisches Meßorgan nach Anspruch 1, dadurch gekennzeichnet, daß zwischen Lichtquelle (4) und Lichtleiter (5) bzw. zwischen Lichtleiter (7) und Lichtempfänger (6) Verbindungsstücke aus Lichtleitfasern (8, 9) eingesetzt sind.

### Claims

1. Optical measuring device for the measurement of the cross-section of textile threads (2) comprising a light source (4), a light receiver (6) and a measurement field (3) arranged therebetween, and also with a respective, optically homogenous, light guide (5, 7) with reflecting side surfaces arranged between the light source (4) and the measurement field (3) and between the measurement field and the light receiver (6) respectively, characterised in that the light guides (5, 7) have an elongate band-like shape and also a constant cross-section over the length, with the length being greater than the largest cross-sectional dimension, so that a uniform light intensity over the whole surface results at the respective position of light emergence.

2. Optical measuring device in accordance with claim 1, characterised in that the outer surfaces of the light guides (5, 7) have a specularly reflecting coating.

3. Optical measuring device in accordance with claim 1, characterised in that the light guides (5, 7) consist of light-permeable plastic such as acrylic resin.

4. Optical measuring device in accordance with the claims 1 and 2, characterised in that the light guides (5, 7) are bent, folded and/or twisted in accordance with the local conditions.

5. Optical measuring device in accordance with claim 1, characterised in that the ends of the light guides (5, 7) facing the light source (4) and/or the light receiver (6) have concave curvatures respectively corresponding to the surfaces of this light source and of this light receiver.

6. Optical measuring device in accordance with claim 1, characterised in that connection pieces of light guiding fibers (8, 9) are inserted between the light source (4) and the light guide (5) and/or between the light guide (7) and the light receiver (6).

### Revendications

1. Appareil optique de mesure en vue de la mesure de la section transversale de fils textiles (2) comportant une source lumineuse (4), un récepteur de lumière (6) et un champ de mesure (3) disposé entre les deux ainsi qu'un guide de lumière optiquement homogène (5, 7) avec des surfaces latérales réfléchissantes disposé respectivement entre la source lumineuse (4) et le champ de mesure (3) et entre le champ de mesure et le récepteur de lumière (6), caractérisé en ce que les guides de lumière (5, 7) présentent une forme de bande allongée ainsi qu'une section transversale constante sur la longueur, la longueur étant plus grande que la plus grande dimension de la section, de sorte qu'une densité lumineuse uniforme en résulte sur toute la surface au point d'émergence de la lumière respectif.

2. Appareil optique de mesure selon la revendication 1, caractérisé en ce que les surfaces externes des guides de lumière (5, 7) comportent un tain.

3. Appareil optique de mesure selon la revendication 1, caractérisé en ce que les guides de lumière (5, 7) sont en matière plastique transparente, telle que de la résine acrylique.

4. Appareil optique de mesure selon les revendications 1 et 2, caractérisé en ce que les guides de lumière (5, 7) sont courbés, pliés et/ou torsadés conformément aux conditions locales.

5. Appareil optique de mesure selon la revendication 1, caractérisé en ce que les extrémités des guides de lumière (5, 7) tournées vers la source lumineuse (4) et/ou le récepteur de lumière (6) présentent des courbures concaves correspondant aux surfaces de cette source lumineuse ou de ce récepteur de lumière, respectivement.

6. Appareil optique de mesure selon la revendication 1, caractérisé en ce qu'entre la source lumineuse (4) et le guide de lumière (5) ou entre le guide de lumière (7) et le récepteur de lumière (6) sont disposées des pièces de liaison en fibres conductrices de la lumière (8, 9).

0 144 502

Fig. 1

Fig. 2

Fig. 3

Fig. 4

1